(19) Europäisches Patentamt
European Patent Office
Office européen des brevets

(11) EP 3 604 462 A1

(12) # EUROPEAN PATENT APPLICATION
published in accordance with Art. 153(4) EPC

(43) Date of publication:
**05.02.2020 Bulletin 2020/06**

(21) Application number: **18776819.7**

(22) Date of filing: **26.03.2018**

(51) Int Cl.:
***C09D 127/12*** *(2006.01)*
***B05D 7/24*** *(2006.01)*
***C09D 7/20*** *(2018.01)*
***C09D 7/42*** *(2018.01)*
***C09D 175/04*** *(2006.01)*

(86) International application number:
**PCT/JP2018/012080**

(87) International publication number:
**WO 2018/181147 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2017 JP 2017065068**

(71) Applicant: **Kanto Denka Kogyo Co., Ltd.**
**Chiyoda-ku**
**Tokyo 101-0063 (JP)**

(72) Inventors:
- **FUKADA Takumi**
  **Shibukawa-shi**
  **Gunma 377-8513 (JP)**
- **MATSUDA Yoshitaka**
  **Shibukawa-shi**
  **Gunma 377-8513 (JP)**
- **HIKOBE Yoshimasa**
  **Shibukawa-shi**
  **Gunma 377-8513 (JP)**

(74) Representative: **Gille Hrabal**
**Brucknerstrasse 20**
**40593 Düsseldorf (DE)**

(54) **COATING COMPOSITION**

(57) The present invention is a paint composition containing (A) a fluorine-containing copolymer, (B) a solvent and (C) a resin particle satisfying the following conditions 1 to 5:
condition 1: an average particle size of the resin particle is 0.1 to 50 μm;
condition 2: a refractive index of the resin particle at 20°C is 0.8 to 1.2 times that of a film composed of the fluorine-containing copolymer (A) at 20°C;
condition 3: a 10% compression strength of the resin particle is 40 MPa or less;
condition 4: a compressibility of the resin particle is 20% or more; and
condition 5: the resin particle does not suffer from brittle fracture under a load force of 0.1 mN.

EP 3 604 462 A1

## Description

Field of the Invention

The present invention relates to a paint composition, a coated article, and a method for producing a coated article.

Background of the Invention

In order to prevent stains from being adhered to or deposited on articles such as plastic products or synthetic leathers, applying a stain resistant paint containing a fluorine-containing copolymer to articles to coat them has been widely implemented. In addition, in order to impart a subdued texture or an upscale looking to these articles, applying a delustering paint to the articles to coat them also has been widely implemented. Under these circumstances, as a paint having stain resistance and a delustering effect, delustering and stain resistant paints wherein inorganic particles such as silica particles or organic particles are added as a delustering agent to a stain resistant paint have been proposed.

JP 2003-49111 A discloses a stain-resistant and delustering paint composition, which contains a fluorine-containing resin having a hydroxyl group, a polyisocyanate compound and a silicate compound, and silica particles and resin particles, wherein the total amount of the silica particles and resin particles is 0.1 to 200 weight% relative to a paint solid content.

JP 2008-127424 A discloses a composition for paint, which contains a delustering agent (A) having organic particles dispersed in an organic solvent, a copolymer (B) having an organosiloxane chain in a main chain or a side chain, and a fluorine resin (C).

JP 4-333674 A discloses to produce a leather-like sheet-shaped matter, which includes: coating a predetermined substrate layer with a solution or dispersion of a thermoplastic polymer mainly composed of an elastomeric polymer containing particles having a particle size of 0.2 to 15 μm, a Brinell hardness of 0 to 100, a softening point of 250°C or higher and a sphericity of 0.5 to 1, and drying them; and performing thermal embossing.

JP 2000-313725 A discloses a method for reducing a gloss of a paint, which uses resin beads having a refractive index satisfying a predetermined relationship with a refractive index of a clear layer.

JP 2005-146179 A proposes, as a low gloss two-component polyurethane paint composition for interiors, which gives a lusterless coating, wherein, in a metallic color, brilliance feeling is emphasized in a highlighted portion, matte feeling clearly exists in a shaded portion, the brilliance feeling and the matte feeling are developed in a gradation state, and a design with high profundity and no white blur is obtained, and wherein, in a solid color, the profundity is increased in hues and a design of high chromaticness can be formed,

one containing 15 to 45 parts by mass of resin beads (A), 5 to 20 parts by mass of a delustering agent (B), 0.1 to 10 parts by mass of an organic solvent-soluble dye (C), 0 to 20 parts by mass of a brilliance material (D) and 0.2 to 10 parts by mass of a coloring pigment (E), wherein the total amount of (A) and (B) is 30 parts by mass or more, the (A)/(B) [mass ratio] is 1/1 to 7/1, and the total amount of (D) and (E) is 0.2 parts by mass or more.

Summary of the Invention

A sufficient delustering effect can be obtained by adding inorganic particles or organic particles having a delustering effect to a stain resistant paint. However, such a delustering and satin resistant paint has drawbacks of a remarkable deterioration of stain resistance, and further, a deterioration of stain resistance, which may be caused by repeated abrasions on coating surfaces during practical use. In addition, when organic particles such as silica particles or organic particles that have been used as a delustering agent are used, they impart a sufficient delustering effect on coating surfaces, but there also exist a problem that they disadvantageously provide appearances having white blurs without a sense of high quality. There has been a major problem to be solved, which is to achieve both of: high stain resistance of a delustering and stain resistant paint, durability against abrasion on coating surfaces, in particular, an abrasion resistance holding property of the stain resistance; and a deep delustering property that gives an upscale looking with no white blur as an appearance.

The present invention provides a paint composition that can impart, to an article, a delustering effect to cause no white blur while giving an upscale looking with profundity, and an antifouling effect with excellent durability.

The present invention relates to a paint composition containing (A) a fluorine-containing copolymer, (B) a solvent and (C) a resin particle satisfying the following conditions 1 to 5:

Condition 1: an average particle size of the resin particle is 0.1 to 50 μm;
Condition 2: a refractive index of the resin particle at 20°C is 0.8 to 1.2 times that of a film composed of the fluorine-containing copolymer (A) at 20°C;
Condition 3: a 10% compression strength of the resin particle is 40 MPa or less;

Condition 4: a compressibility of the resin particle is 20% or more;
Condition 5: the resin particle does not suffer from brittle fracture under a load force of 0.1 mN.

In addition, the present invention relates to a coated article, which has a substrate and a cured film of the paint composition of the present invention formed on the substrate.
In addition, the present invention relates to a method for forming a cured film, which includes: applying the paint composition of the present invention to a substrate to form a coating film; and curing the coating film to form a cured film.
Hereafter, explanation will be made by referring to (A) a fluorine-containing copolymer, (B) a solvent and (C) a resin particle satisfying the above conditions 1 to 5 as component (A), component (B) and component (C), respectively.
The present invention provides a paint composition that can impart to an article a delustering effect to cause no white blur while giving an upscale looking with profundity and an antifouling effect with excellent durability. In addition, the paint composition of the present invention can give these effects without impairing a texture of an object of interest. Thus, this is suitable for processing of a flexible material such as synthetic leather.

Description of Embodiments

[Paint composition]

<Component (A): fluorine-containing copolymer>

Component (A) is a fluorine-containing copolymer. Component (A) is preferably a curable fluorine-containing copolymer, further a thermosetting fluorine-containing copolymer.
Examples of component (A) include a fluorine-containing copolymer (hereinafter, referred to as component (A1)) containing, as a polymerization unit, 15 to 85 mol% of a fluoroolefin and 0.001 to 30 mol% of one or more organosilicon compounds selected from compounds represented by the following general formulas (1) and (2):

[Chemical formula 1]

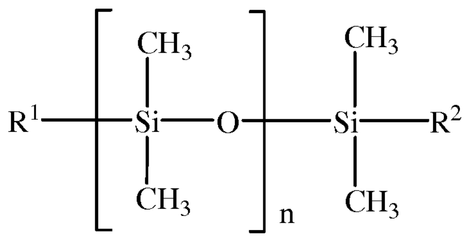

(1)

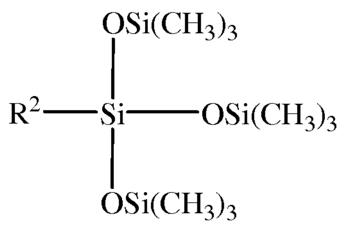

(2)

wherein $R^1$ represents an alkyl group with 1 to 6 carbon atoms, $-(CH_2)_r-OOC(CH_3)C=CH_2$ or $^-CH=CH_2$; $R^2$ represents $^-(CH_2)_r-OOC(CH_3)C=CH_2$ or $^-CH=CH_2$, n represents a number of 1 to 420, and r represents a number of 1 to 6.
The fluoroolefin is an olefin having one or more fluorine atoms in a molecule; and preferable examples thereof include vinylidene fluoride, tetrafluoro ethylene, chlorotrifluoro ethylene and hexafluoro propylene. These fluoroolefins may be used alone or in combination with two or more.
The fluoroolefin is present in an amount of 15 to 85 mol%, preferably 25 to 85 mol% of all monomer units of component (A1). As long as it is present in this range, sufficient water and oil repellent properties and an antifouling property can be obtained for a long term; and further, sufficient chemical resistance and weather resistance can be obtained. Further, the production thereof is easy.
In the general formula (1), n is a number of preferably 1 to 420, more preferably 2 to 350, and further preferably

5 to 200.

The organosilicon compound represented by the general formula (1) or (2) is present in an amount of 0.001 to 30 mol%, and preferably 0.005 to 25 mol% of all monomer units of component (A1). As long as it is present in this range, sufficient water and oil repellent properties and an antifouling property can be obtained for a long term; and further, sufficient chemical resistance and weather resistance can be obtained. Further, the production thereof is easy.

The organosilicon compound represented by the general formula (1) or (2) is preferably a polydimethyl siloxane with one methacryl-modified terminal, a polydimethyl siloxane with one acryl-modified terminal, a polydimethyl siloxane with both methacryl-modified terminals, or the like.

The organosilicon compound represented by the general formula (1) or (2) may be used alone or in combination of two or more.

The number average molecular weight of the organosilicon compound represented by the general formula (1) or (2) is preferably 200 to 30,000.

As the organosilicon compound represented by the general formula (1) or (2), one or more organosilicon compounds selected from compounds represented by the following formulas (3), (4), (5) and (6) are exemplified.

$$CH_2=C(CH_3)\text{-}COO\text{-}C_3H_6\text{-}Si(CH_3)_2\text{-}[O\text{-}Si(CH_3)_2]_m\text{-}R^3 \quad (3)$$

In the formula, $R^3$ represents an alkyl group with 1 to 6 carbon atoms, and m represents 1 to 250, and preferably 5 to 200.

$$CH_2=CH\text{-}COO\text{-}C_3H_6\text{-}Si(CH_3)_2\text{-}[O\text{-}Si(CH_3)_2]_p\text{-}R^4 \quad (4)$$

In the formula, $R^4$ represents an alkyl group with 1 to 6 carbon atoms, and p represents 1 to 250, and preferably 5 to 200.

$$R^5\text{-}C_3H_6\text{-}Si(CH_3)_2\text{-}[O\text{-}Si(CH_3)_2]_q\text{-}C_3H_6\text{-}R^5 \quad (5)$$

In the formula, $R^5$ represents $-OOC(CH_3)C=CH_2$, and q represents 1 to 250, and preferably 5 to 200.

$$CH_2=C(CH_3)COO\text{-}C_3H_6Si[O\text{-}Si(CH_3)_3]_3 \quad (6)$$

Component (A1) may contain a polymerization unit of a compound (hereinafter, referred to as other monomer) other than the fluoroolefin and the organosilicon compound. The other monomer is preferably one or more monomers (hereinafter, referred to as monomer (I)) selected from alkyl vinyl ethers, alkyl allyl ethers, methacrylic esters and acrylic esters.

Specific examples of alkyl vinyl ethers include methyl vinyl ether, ethyl vinyl ether, isopropyl vinyl ether, n-propyl vinyl ether, n-butyl vinyl ether, isobutyl vinyl ether, n-pentyl vinyl ether, isopentyl vinyl ether, tertiary pentyl vinyl ether, n-hexyl vinyl ether, isohexyl vinyl ether, 2-ethylhexyl vinyl ether, cyclohexyl vinyl ether, octadecyl vinyl ether, glycidyl vinyl ether, glycidyl oxymethyl vinyl ether, glycidyl oxyethyl vinyl ether, glycidyl oxybutyl vinyl ether, glycidyl oxypentyl vinyl ether, glycidyl oxycyclohexyl vinyl ether, hydroxymethyl vinyl ether, hydroxyethyl vinyl ether, hydroxypropyl vinyl ether, hydroxybutyl vinyl ether, hydroxypentyl vinyl ether, hydroxyhexyl vinyl ether, 4-hydroxycyclohexyl vinyl ether, and 2-(perfluoro hexyl)ethyl vinyl ether.

In addition, specific examples of alkyl allyl ethers include ethyl allyl ether, butyl allyl ether, cyclohexyl allyl ether, isobutyl allyl ether, n-propyl allyl ether, allyl glycidyl ether, 3-allyloxy-1,2-propane diol, glycerol-$\alpha$-monoallyl ether, and ethylene glycol mono allyl ether.

In addition, specific examples of acrylic esters include methyl acrylate, ethyl acrylate, n-butyl acrylate, t-butyl acrylate, 2-hydroxyethyl acrylate, 2-hydroxybutyl acrylate, 2-(perfluorobutyl)ethyl acrylate, and 2-(perfluorohexyl)ethyl acrylate.

In addition, specific examples of methacrylic esters include methyl methacrylate, ethyl methacrylate, n-butyl methacrylate, t-butyl methacrylate, glycidyl methacrylate, cyclohexyl methacrylate, 2-hydroxyethyl methacrylate, 3-hydroxypropyl methacrylate, 4-hydroxybutyl methacrylate, 2-hydroxypropyl methacrylate, dicyclopentanyl methacrylate, 2-(perfluorobutyl)ethyl methacrylate, and 2-(perfluorohexyl)ethyl methacrylate.

When the monomer (I) is contained, the ratio of polymerization unit of the monomer (I) is preferably 1 to 50 mol% in all the polymerization units of component (A1).

In addition, examples of further other monomers include: olefins such as ethylene and propylene; haloolefins such as vinyl chloride and vinylidene chloride; and esters of alkane carboxylic acid such as vinyl acetate, n-vinyl butyrate, vinyl isobutyrate, vinyl propionate and vinyl alcohol. The polymerization unit of these monomers is present in an amount of preferably less than 20 mol% in all the polymerization units of component (A1).

Component (A1) can be produced by copolymerizing a predetermined ratio of a monomer mixture by use of a polymerization initiator. As the polymerization initiator, a water-soluble or oil-soluble initiator is appropriately used depending on the polymerization form or the type of a solvent used in accordance with the desire. As the oil-soluble initiator, used are, for example, peroxy ester type peroxides such as t-butyl peroxyisobutyrate and t-butyl peroxyacetate; dialkyl peroxydicarbonates such as diisopropyl peroxydicarbonate and dinormalpropyl peroxydicarbonate; benzoyl peroxide; and azobisisobutyronitrile. As the water-soluble initiator, used are, for example, a persulfate such as potassium persulfate; hydrogen peroxide; redox initiators of combinations of a reducing agent such as sodium hydrogen sulfate or sodium thiosulfate with them; further, inorganic initiators wherein a small amount of iron, ferrous salt, silver nitrate or the like coexists with them; and organic initiators of dibasic acid salt such as succinic acid peroxide, diglutaric acid peroxide and monosuccinic acid peroxide. The amounts to be used of these polymerization initiators are appropriately determined depending on its type, the copolymerization reaction condition, etc.; however, the amount is usually in the range of 0.005 to 5 mass%, preferably 0.1 to 2 mass% relative to the total monomer amount to be used.

A polymerization method is not particularly limited, and for example, a mass polymerization method, a suspension polymerization method, an emulsion polymerization method, a solution polymerization method or the like may be used. However, preferable is: a solution polymerization method using, as a solvent, ketones such as methyl ethyl ketone, carboxylate esters such as butyl acetate, saturated aliphatic hydrocarbons such as hexane, aromatic hydrocarbons such as xylene, alcohols such as isopropyl alcohol, saturated halogenated hydrocarbons having one or more fluorine atoms or the like; or an emulsion polymerization method in an aqueous solvent. Further, as a solvent particularly preferable for obtaining a fluorine-containing copolymer by a solution polymerization method, exemplified are ethyl acetate, butyl acetate, hexane, cyclohexane, heptane, xylene, toluene, isopropyl alcohol, and methyl ethyl ketone.

When copolymerization is caused in an aqueous solvent (emulsion polymerization method, suspension polymerization method), it is desired to control a pH value of a reaction solution of 4 or more, and preferably 6 or more during polymerization usually by using a suspension or an emulsifier as a dispersion stabilizer and adding a basic buffer.

For these copolymerization reactions, the reaction temperature is appropriately selected usually in the range of -30°C to 150°C depending on the type of a polymerization medium of a polymerization initiator. For example, when copolymerization is caused in a solvent, the temperature is usually in the range of 0°C to 100°C, preferably 10°C to 90°C. The reaction pressure is not particularly limited, but it is usually selected in the range of 0.1 to 10 MPa, preferably 0.1 to 5 MPa.

Further, the copolymerization reaction can be caused by adding an appropriate chain transfer agent.

When acid substances such as hydrogen fluoride are desorbed from a monomer or a polymer during polymerization to render a polymerization solution acidic, thereby causing a polymer-containing solution to be thickened or gelled during storage; or when these acid substances inhibit a catalytic reaction in the case of using a curing catalyst for a curing reaction between a polymer and a polyisocyanate copolymer, the acid substances such as hydrogen fluoride may be neutralized by adding organic amines such as dimethylamine, diethylamine, dipropylamine, diisopropylamine, dibutylamine, diisobutylamine, dipentylamine, diisopentylamine, dihexylamine, diheptylamine, dioctylamine, trimethylamine, triethylamine, tripropylamine, triisopropylamine, tributylamine, triisobutylamine, tripentylamine, triisopentylamine, trihexylamine, triheptylamine, trioctylamine, diazabicycloundecene and 1,4-diazabicyclo[2.2.2]octane; ion-exchange resins such as a basic anion-exchange rein; alkali metal salts or alkaline-earth metal salts such as sodium hydrogencarbonate, sodium carbonate, potassium hydrogencarbonate, potassium carbonate and sodium phosphate; metallic oxides such as alumina, zirconia and titania; and zeolites such as molecular sieves. The addition may be carried out at any timing of before, during or after polymerization, and the addition may be divided into two or more times.

Component (A), further component (A1), is preferably one having a reactive group such as a hydroxyl group and an epoxy group, which allows the component to be curable. Among the monomer (I), use of, for example, a monomer having a hydroxyl group or an epoxy group enables component (A), further component (A1) to become a curable fluorine-containing copolymer.

When component (A) is a curable fluorine-containing copolymer, the paint composition of the present invention preferably contains a curing agent of component (A) (hereinafter, referred to simply as curing agent).

As the curing agent, polyvalent isocyanate compounds are exemplified. Specific examples thereof include hexamethylene diisocyanate, pentamethylene diisocyanate, isophorone diisocyanate, 2,4-tolylene diisocyanate, diphenylmethane-4,4'-diisocyanate, xylene diisocyanate, methylcyclohexyl diisocyanate, trimethylhexamethylene diisocyanate, n-pentane-1,4-diisocyanate and lysine diisocyanate. Of these examples, those having an unsaturated bond in a structure except an isocyanate group may be a hydrogenated product thereof. In addition, they may be a modified body such as an isocyanurate modified body, biuret modified body, an adduct modified body, an allophanate modified body, a carbodiimide modified body, a urea modified body and a urethane modified body composed of the polyisocyanate compound. Use of non-yellowing type polyisocyanate compound is also preferred.

When component (A) is a curable fluorine-containing copolymer, heat curing can be performed further by use of a melamine curing agent, a urea resin curing agent, a polybasic acid curing agent or the like. Example of the melamine curing agent include butylated melamine, methylated melamine and epoxy modified melamine; and a curing agent having a modification degree varied depending on the use is appropriately used and a self-condensation degree thereof can be appropriately selected. Examples of the urea resin curing agent include a methylated urea resin and a butylated urea

resin. Examples of the polybasic acid curing agent include a long-chain aliphatic dicarboxylic acid, aromatic polyvalent carboxylic acid and acid anhydrides thereof.

Further, blocked polyvalent isocyanates are also suitably used as a curing agent. In addition, for use of a melamine curing agent or a urea resin curing agent, curing can be accelerated by addition of an acid catalyst.

When the fluorine-containing copolymer of the present invention contains an epoxy group as a curable site, a curing agent usually used for a curable epoxy paint is used; and examples thereof include: aliphatic amines or modified products thereof such as diethylenetriamine, triethylenetetramine, and tetraethylenepentamine; aromatic amines or modified products thereof such as meta phenylene diamine, p-p'-diaminodiphenylmethane and diaminophenyl sulfone; and polyvalent carboxylic acids or anhydrides thereof such as phthalic anhydride, maleic anhydride, oxalic anhydride, hexahydrophthalic acid and pimelic acid.

When component (A) is a curable fluorine-containing copolymer, the paint composition of the present invention contains a curing agent in an amount of preferably 1 to 300 parts by mass, more preferably 2 to 250 parts by mass, further preferably 3 to 200 parts by mass, further more preferably 10 to 150 parts by mass, and further more preferably 15 to 100 parts by mass relative to 100 parts by mass of component (A).

Component (A), further component (A1), has a number average molecular weight of preferably $1.0 \times 10^4$ to $7.0 \times 10^4$, more preferably $1.0 \times 10^4$ to $5.0 \times 10^4$, further preferably $1.0 \times 10^4$ to $3.0 \times 10^4$, further more preferably $1.0 \times 10^4$ to $2.0 \times 10^4$, and further more preferably $1.0 \times 10^4$ to $1.9 \times 10^4$. The number average molecular weight of component (A), further component (A1), may be less than $2.0 \times 10^4$, and further $1.9 \times 10^4$ or less. Accordingly, the above range of the number average molecular weight may have an upper limit of less than $2.0 \times 10^4$ and further $1.9 \times 10^4$ or less.

Component (A), further component (A1), has a weight average molecular weight of preferably $0.5 \times 10^5$ to $5.0 \times 10^5$, and more preferably $1.0 \times 10^5$ to $3.0 \times 10^5$.

In the above, the number average molecular weight and the weight average molecular weight of component (A), further component (A1) are each measured by gel permeation chromatography under the following conditions.

Measurement apparatus: HLC-8320GPC (Tosoh Corporation)
Column: TDgel SuperHZM-M (Tosoh Corporation)
Detector: RI (differential refractometer attached to the apparatus)
Standard substance: polystyrene
Data processing: EcoSEC-WS (Tosoh Corporation)
Measurement conditions: column temperature (40°C), solvent (tetrahydrofuran), flow rate (0.35 mL/min), sample concentration (0.14 wt%), sample injection volume (20 μL)

In the present invention, component (A) is a curable fluorine-containing copolymer having a hydroxyl group, and a curing agent is a modified body of a polyisocyanate compound, specifically and preferably an isocyanurate product, an adduct product and allophanate product of a polyisocyanate compound, or a mixture thereof, which is a combination thereof. In this case, the equivalent ratio between hydroxyl group (OH) possessed by component (A) and NCO group possessed by the curing agent is NCO/OH of preferably 0.3 to 2.0, and more preferably 0.5 to 1.5.

The paint composition of the present invention contains component (A) in an amount of preferably 1 to 90 mass%, more preferably 1 to 80 mass%, further preferably 1 to 50 mass%, further more preferably 1 to 30 mass% and further more preferably 3 to 30 mass%.

<Component (B): solvent>

Component (B) is a solvent. Component (B) is preferably a solvent, in which component (A) can be dissolved. Component (B) is preferably an organic solvent. As the organic solvent, esters, ketones, alcohols, aliphatic hydrocarbons and others are exemplified. Specific examples thereof include: carboxylate esters such as ethyl acetate, propyl acetate, butyl acetate and amyl acetate; ketones such as methyl ethyl ketone and methyl isobutyl ketone; alcohols such as methyl alcohol, ethyl alcohol, isopropyl alcohol, methoxy propanol and ethoxy propanol; and alkanes such as n-pentane, i-pentane, n-hexane, i-hexane, cyclohexane, n-heptane, i-heptane and 2,2,4-trimethyl pentane. In addition, organic solvents known as Solvesso (trade name) or mineral spirit are also usable. In addition, ethers such as methyl cello solve, and ethylene glycol monomethyl ether are usable. In addition, aromatic hydrocarbons such as benzene, toluene and xylene are usable. In addition, pyrrolidones such as N-methyl pyrrolidone are usable. In addition, fluorine-based organic solvents such as Zeorora H (trade name), Novec 7200 (trade name) and Novec 7300 (trade name) are usable. The above organic solvents may be used alone or in combination of two or more.

Water may be used as a solvent of component (B); however, in that case, an organic solvent is also preferably contained. When water is contained, a mass ratio of water/(water + organic solvent) is preferably 0.01 to 10.

The paint composition of the present invention contains component (B) in an amount of preferably 1 to 99 mass%, more preferably 5 to 99 mass%, further preferably 20 to 99 mass%, further more preferably 40 to 98 mass%, and further more preferably 50 to 95 mass% in the composition.

<Component (C): resin particle>

Component (C) is a resin particle satisfying the following conditions 1 to 5:

Condition 1: an average particle size of the resin particle is 0.1 to 50 μm;
Condition 2: a refractive index of the resin particle at 20°C is 0.8 to 1.2 times that of a film composed of the fluorine-containing copolymer (A) at 20°C;
Condition 3: a 10% compression strength of the resin particle is 40 MPa or less;
Condition 4: a compressibility of the resin particle is 20% or more; and
Condition 5: the resin particle does not suffer from brittle fracture under a load force of 0.1 mN.

As shown in condition 1, the average particle size of the resin particle in the present invention is 0.1 to 50 μm, preferably 0.2 to 45 μm, and more preferably 0.5 to 40 μm. When the average particle size of the resin particle is 0.1 μm or more as shown in condition 1, a delustering property of interest is likely to be obtained. In addition, when the average particle size of the resin particle is 50 μm or less, flaking of particles from a coating film or coating damages resulting therefrom are less likely to occur upon reception of abrasion; and this can avoid deterioration of stain resistance and abrasion resistance, the degradation of stain resistance caused by abrasion, or the degradation of an appearance.

The average particle size of condition 1 is measured by use of a Shimadzu micro compression tester MCT-510 and an attached observation kit (Shimadzu Corporation) through microscopic observation (magnification of object lens: 50 times). The number n of measurements is three and an average thereof is taken as a value of average particle size of condition 1.

As shown in condition 2 in the present invention, a refractive index of the resin particle at 20°C is 0.8 to 1.2 times, preferably 0.9 to 1.1 times, and more preferably 0.95 to 1.05 times that of a film composed of (A) fluorine-containing copolymer at 20°C. It is believed that the refractive index of condition 2 falling within this range allows itself to be close to the refractive index of the resin particle in the film composed of component (A) to reduce light scattering at a boundary between the film composed of component (A) and the resin particle, so that an effect of avoiding a white blur on a coating film surface can be obtained.

Regarding condition 2, the refractive index of the film composed of component (A) is measured by JIS K 7142 A method under an environment at 20°C. In this measurement, when component (A) is a curable fluorine-containing copolymer, a cured film obtained by use of component (A) and a curing agent, that is a cured film composed of component (A) and a curing agent thereof is an object to be measured.

In addition, regarding condition 2, the refractive index of the resin particle is measured by JIS K 7142 B method under an environment at 20°C.

Each of the refractive indexes is measured specifically by a method described in Examples.

As shown in condition 3, the 10% compression strength of the resin particle in the present invention is 40 MPa or less, preferably 30 MPa or less, and more preferably 25 MPa or less. It is believed that the 10% compression strength of condition 3 falling within this range allows particles to be easily deformed by an external force resulting from abrasion, thereby preventing abrasion of a surface that gives stain resistance by the fluorine-containing copolymer as a binder, and also to reduce damage such as cracking or the like caused by an external force of the entire coating structure, so that an effect of improving abrasion resistance can be obtained. The 10% compression strength of condition 3 is a load force at the time when a particle size of resin particles is displaced by 10%.

The 10% compression strength of condition 3 is calculated based on: the force at the time loading and the particle size of particles at that force, and the force at the time of changing to unloading, which are measured under the conditions: a maximum test force of 2.800 mN, a minimum test force of 0.028 mN, a load rate of 0.0446 mN/sec, a test mode for soft, and an upper pressing indenter plane of ϕ20. The number of measurements n is three, and an average thereof is regarded as a value of 10% compression strength of condition 3.

As shown in condition 4, the compressibility of the resin particle in the present invention is 20% or more, preferably 30% or more and more preferably 40% or more. It is considered that the compressibility of condition 4 falling within this range enhances the degree of freedom in the deformation of resin particles when an external force such as abrasion is applied to a coating film, compared to those having a low compressibility outside the range; and reduces abrasion on a film surface that enables the fluorine-containing copolymer as a binder to give stain resistance. In particular, in the case that the particle size is close to the film thickness, it is believed that the tracking property of particle deformation in response to the deformation of film coating caused by an external force is enhanced; and this allows an effective dispersion of the external force applied to the film, reducing cracking of a coating film or flaking of resin particles, and preventing the deterioration of the stain resistance of film surfaces caused by abrasion.

The compressibility of condition 4 is calculated based on a force at the time of loading and a particle size of particles at that force, and a force at the time of changing to unloading, which are measured by use of a Shimadzu micro compression tester MCT-510, and an attached observation kit (Shimadzu Corporation) under the conditions: a maximum

test force of 2.800 mN, a minimum test force of 0.028 mN, a load rate of 0.0446 mN/sec, a test mode for soft, and an upper pressing indenter plane of ϕ20. The number n of measurements is three, and an average thereof is taken as a value of compressibility of condition 4.

As shown in condition 5, the resin particle in the present invention does not suffer from brittle fracture under a load force of 0.1 mN. Condition 5 may be preferably set so that the resin particle does not suffer from brittle fracture under a load force of 0.3 mN. Satisfying condition 5 is preferred from the viewpoint of: maintaining the property to be easily deformed by an external force such as abrasion and the abrasion resistance holding property by the film deformation tracking property; and preventing the deterioration of a coating film structure caused by brittle fracture of particles and the decline of durability.

The brittle fracture of resin particles of condition 5 is determined by measuring a load force that causes brittle fracture by use of a Shimadzu micro compression tester MCT-510, and an attached observation kit (Shimadzu Corporation) under the conditions: a maximum test force of 2.800 mN, a minimum test force of 0.028 mN, a load rate of 0.0446 mN/sec, a test mode for soft, and an upper pressing indenter plane of ϕ20. The number n of measurements is three, and among them, when a minimum of load force is 0.1 mN or more, and preferably 0.3 mN or more, it is determined that condition 5 is satisfied.

From the viewpoint of providing a uniform appearance with no unevenness and ensuring the abrasion resistance by enhancing a content ratio of particles that give a particle size in an appropriate range for a designed film thickness relative to the entire particles, the CV value of component (C) is preferably 30% or less, more preferably 20% or less, and further preferably 10% or less. The CV value (Coefficient of Variation) is a ratio of standard deviation relative to the average particle size, and it is known as an index indicating the uniformity in particle size.

The CV value is measured by use of a Shimadzu laser diffraction particle size distribution analyzer SALD-2300 (Shimadzu Corporation) and a cyclone type dry measurement unit DS5 (Shimadzu Corporation) under the conditions: a dispersion pressure of 0.4 MPa and a table climbing rate of 6 to 10 mm/sec.

Component (C) has a recovery of preferably 5% or more, more preferably 6% or more, and further preferably 8% or more.

The recovery of component (C) is calculated based on a force at the time of loading and a particle size of particles at that force, and a force at the time of changing to unloading measured by use of a Shimadzu micro compression tester MCT-510, and an attached observation kit (Shimadzu Corporation) under the conditions: a maximum test force of 2.800 mN, a minimum test force of 0.028 mN, a load rate of 0.0446 mN/sec, a test mode for soft, and an upper pressing indenter plane of ϕ20. The number n of measurements is three, and an average thereof is taken as a value of recovery.

As component (C), exemplified is one composed of one or more resins selected from methacrylic resins, acrylic resins, silicone resins, urethane resins, melamine resins, polystyrene resins, fluoro resins, polyethylene terephthalate resins, polyether ether ketone resins, polycarbonate resins, polyamide resins and polyamide imide resins. Component (C) is preferably one composed of one or more resins selected from methacrylic resins, acrylic resins, silicone resins and urethane resins; and more preferably one composed of one or more resins selected from methacrylic resins, acrylic resins and silicone resins.

Component (C) is preferably a crosslinked resin particle.

Component (C) is preferably in the shape of a sphere. Regarding the degree of sphere, the flattening is preferably 0.9 or more under no load condition.

The paint composition of the present invention contains component (C) in an amount of preferably 10 to 200 parts by mass, more preferably 30 to 200 parts by mass, further preferably 30 to 150 parts by mass, and further more preferably 30 to 100 parts by mass relative to 100 parts by mass of component (A).

<Optional components>

For the paint composition of the present invention, a curing catalyst can be added and used. As the curing catalyst, exemplified are publicly-known catalysts including metal complexes containing metals such as Sn, Zn, Zr, Ti, Bi, Al, Li and Ca, metallic salts, amines, organic acids, and acid phosphate esters; and mixtures thereof.

In addition, as a resin except for component (A), an acrylic resin, a urethane resin, a silicone resin and varnish thereof may be contained.

The paint composition of the present invention can contain an optional component other than components (A) to (C) in such a range that the effects of the present invention are not impaired. Examples of the optional component include a dispersant, a plasticizer, a thickener, an anti-foaming agent, an anti-setting agent, a leveling agent, an antiseptic, an antibacterial agent, an antiviral agent, an antifungal agent, an antioxidant, an anti-oxidizing agent, a flame retardant, a light stabilizer, a UV absorber, a lubricant, an anti-freezing agent, a film forming aid, a color separation inhibitor, a pH-adjustor, a surfactant, an anti-skinning agent, catalysts, a moisture absorbent, a pigment, a deodorant, a silane coupling agent, an antistatic agent, a water repellent and an oil repellent.

The paint composition of the present invention can be used as a delustering paint, a stain resistant paint, or

the like.

[Coated article]

The present invention provides a coated article, which has a substrate, and a cured film of the paint composition of the present invention formed on the substrate. The matters described for the paint composition of the present invention are appropriately applicable to a coated article of the present invention.

Examples of the substrate include: metals such as iron, stainless and aluminum, and surface treated products thereof; cement-based substrate such as cement, lime and gypsum; and plastics such as polyurethane, polyester, polyvinyl chloride, polyolefin, polycarbonate, ABS and acrylic resins. In addition, glass, timber, ceramics and others are exemplified. These substrates may be those wherein preparation of surfaces, for example, is carried out by a sealer depending on the type of substrate. In addition, the substrate may be one wherein a coating film is formed on a surface thereof with various paints other than the paint composition of the present invention.

The substrate is preferably a substrate formed to include a material selected from polyurethane, vinyl chloride, polyolefin, polyester, glass and a metal, and more preferably a substrate formed to include a material selected from polyurethane, vinyl chloride, and polyolefin. The substrate is preferably a material known as so-called synthetic leather. The substrate is preferably synthetic leather composed of a material selected from wet polyurethane, dry polyurethane, aqueous urethane foamed synthetic leather and vinyl chloride.

The substrate is a film-like substrate, a sheet-like substrate, and molded bodies having shapes other than these. The substrate may be either of a molded body processed for a raw material and a molded body processed for a product. Specific examples of the film-like substrate include a polyurethane film, a vinyl chloride film, a PET film, an acryl film and others. In addition, examples of the sheet-like substrate include a wet polyurethane synthetic leather sheet, a dry polyurethane synthetic leather sheet, a urethane rubber sheet, a vinyl chloride synthetic leather sheet and others. The above molded body is an acryl molded body, a polycarbonate molded body, an ABS molded body, an unsaturated polyester molded body, a glass molded body and others, which have any shape.

In the coated article of the present invention, a cured film is formed. The refractive index at 20°C of the resin particle of component (C) is preferably 0.95 to 1.05 times, further 0.97 to 1.03 times, and further 0.98 to 1.02 times the refractive index at 20°C of an outermost layer of the substrate. In this connection, the outermost layer of the substrate is a layer of outermost surface of the substrate, on which the cured film of the paint composition of the present invention is formed; in other words, it indicates a layer that provides a surface of the substrate, on which the cured film is formed. It is believed that the refractive index of the resin particle falling within the above range enables the refractive index of the substrate to be close to that of the resin particle, thereby reducing light scattering at a boundary between the substrate and the resin particle and providing an effect of avoiding a white blur on a coating surface.

The refractive index of the resin particle is measured by the same method as for condition 2. The refractive index of the outermost layer of the substrate is calculated by measuring a reflectance of the outermost layer of the substrate under an environment at 20°C by means of a spectrophotometer (ultraviolet and visible spectrophotometer V-560 (manufactured by JASCO Corporation), an integrating sphere device ISV-469), and by calculating with the formula,

$$n_1 = \{ - n_2 ( \sqrt{R_{ref}} + 1 ) / ( \sqrt{R_{ref}} - 1 ) \}.$$

In the formula, $n_1$ is a refractive index of the substrate, $n_2$ is a refractive index (1.00) of air, and $R_{ref}$ is a surface reflectance of the substrate.

In the coated article of the present invention, the film thickness of the cured film is preferably 0.1 to 100 μm, more preferably 0.2 to 80 μm, and further preferably 0.5 to 60 μm.

The film thickness (μm) of such a cured film is preferably 0.5 to 1.5 times the average particle size (μm) of component (C). Note that when component (C) has a flat shape or an elliptical shape, an average particle size of the major axis is employed.

The gloss value at 60° of the cured film is preferably 10 or less, more preferably 5 or less, and further preferably 3 or less.

The gloss value at 60° of the cured film is measured by GLOSS CHECKER IG-330 (HORIBA, Ltd.) at the level of n=3.

[Method for forming a cured film]

The present invention provides a method for forming a cured film, which includes applying a paint composition of the present invention to a substrate to form a coating film, and curing the coating film to form a cured film. The matters described for the paint composition and the coated article of the present invention are appropriately applicable to the

method for forming a cured film of the present invention.

Specific examples of the substrate are the same as those for the coated article of the present invention, and preferable embodiments are also the same. The substrate may be either of a molded body processed for a raw material and a molded body processed for a product.

In the method for forming a cured film of the present invention, the refractive index at 20°C of the resin particle of component (C) in the paint composition is preferably 0.95 to 1.05 times, further 0.97 to 1.03 times, and further 0.98 to 1.02 times the refractive index at 20°C of an outermost layer of the substrate. For the above, the refractive index of the resin particle is measured by the method for condition 2, and the refractive index of the outermost layer of the substrate is measured by the method described for the cured article of the present invention.

As the method for applying the paint composition of the present invention to a substrate, publicly-known methods can be employed depending on the shape or material of the substrate, and examples thereof include gravure coater, roll coater, reverse roll coater, a comma coater, a doctor knife coater, a bar coater, a kiss roll coater, a roller coating, spray coating, electrostatic spray coating, curtain coating, dip coating, rotary screen print, brush coating, and others. The coating amount of the paint composition or the thickness of the coating film are appropriately determined considering the film thickness of the cured film of interest, based on the composition or the like of the paint composition.

The coating film formed on the substrate is heated to preferably 30 to 250°C, and more preferably 40 to 150°C, and cured.

Preferable ranges for the film thickness and the gloss value at 60° of the cured film are the same as those of the coated article of the present invention.

In the method for forming a cured film of the present invention, it is preferred to apply the paint composition so that the film thickness of the cured film is 0.5 to 1.5 times the average particle size (μm) of component (C) in the paint composition. Note that when component (C) has a flat shape or an elliptical shape, an average particle size of the major axis is employed.

The film thickness of the cured film is measured by cross-section observation by means of a contact thickness meter, an electromagnetic thickness meter, an eddy current flow thickness meter, a light interference thickness meter, a spectroscopic ellipsometer, and a microscope (an optical microscope, a microscope, SEM, TEM, etc.). In addition, it is possible to estimate a thickness of a cured film by a simplified calculated value from an estimated wet film thickness determined by coating method or means based on the solid content concentration or the specific gravity of composition of the paint. For example, in the case that application is conducted so that the wet film thickness of 46 μm, when the solid content concentration of the paint is 15 mass% and the specific gravity of the paint composition is 0.9, the estimated dry film thickness can be calculated as 46 μm × 0.15 × 0.9 = 6.21 μm. In this manner, the film thickness of coating film (wet state) can be determined.

The present invention also provides a method for producing a coated article, which includes applying the paint composition of the present invention to a substrate to form a coating film, and curing the coating film to form a cured film. The matters described for the paint composition, the coated article and the method for forming a cured film of the present invention are appropriately applicable to this method.

[Disclosure of the present specification]

The present specification discloses use of a composition containing (A) a fluorine-containing copolymer, (B) a solvent and (C) a resin particle satisfying the following conditions 1 to 5, as a paint composition:

condition 1: an average particle size of the resin particle is 0.1 to 50 μm;
condition 2: a refractive index of the resin particle at 20°C is 0.8 to 1.2 times that of a film composed of the fluorine-containing copolymer (A) at 20°C;
condition 3: a 10% compression strength of the resin particle is 40 MPa or less;
condition 4: a compressibility of the resin particle is 20% or more; and
condition 5: the resin particle does not suffer from brittle fracture under a load force of 0.1 mN.

The present specification discloses a composition for paint, which contains (A) a fluorine-containing copolymer, (B) a solvent and (C) a resin particle satisfying the following conditions 1 to 5:

condition 1: an average particle size of the resin particle is 0.1 to 50 μm;
condition 2: a refractive index of the resin particle at 20°C is 0.8 to 1.2 times that of a film composed of the fluorine-containing copolymer (A) at 20°C;
condition 3: a 10% compression strength of the resin particle is 40 MPa or less;
condition 4: a compressibility of the resin particle is 20% or more; and
condition 5: the resin particle does not suffer from brittle fracture under a load force of 0.1 mN.

The present specification discloses a method for producing a paint composition, which includes mixing (A) a fluorine-containing copolymer, (B) a solvent and (C) a resin particle satisfying the following conditions 1 to 5 with one another:

condition 1: an average particle size of the resin particle is 0.1 to 50 μm;
condition 2: a refractive index of the resin particle at 20°C is 0.8 to 1.2 times that of a film composed of the fluorine-containing copolymer (A) at 20°C;
condition 3: a 10% compression strength of the resin particle is 40 MPa or less;
condition 4: a compressibility of the resin particle is 20% or more; and
condition 5: the resin particle does not suffer from brittle fracture under a load force of 0.1 mN.

The present specification discloses a method for determining a resin particle for paint composition, which is for preparing a paint composition by combining (A) a fluorine-containing copolymer with (B) a solvent, wherein the method includes determining whether a predetermined resin particle satisfies the following conditions 1 to 5, and determining a resin particle satisfying all of the conditions 1 to 5 as a resin particle to be mixed in the paint composition:

condition 1: an average particle size of the resin particle is 0.1 to 50 μm;
condition 2: a refractive index of the resin particle at 20°C is 0.8 to 1.2 times that of a film composed of the fluorine-containing copolymer (A) at 20°C;
condition 3: a 10% compression strength of the resin particle is 40 MPa or less;
condition 4: a compressibility of the resin particle is 20% or more; and
condition 5: the resin particle does not suffer from brittle fracture under a load force of 0.1 mN.

The matters described for the paint composition, the coated article and the method for producing a coated article of the present invention are applicable to these disclosures.
Preferable embodiments of the present invention will be described below.
A paint composition containing (A) a curable fluorine-containing copolymer having a hydroxyl group and including a fluoroolefin in an amount of 15 to 85 mol% of all monomer units and one or more organosilicon compounds selected from the compounds represented by the general formulas (1) and (2) in an amount of 0.001 to 30 mol% of all monomer units [hereinafter, referred to as component (A)]; (B) an organic solvent [hereinafter, referred to as component (B)]; (C) a resin particle satisfying the following conditions 1 to 5 [hereinafter, referred to as component (C)]; and a polyvalent isocyanate compound as a curing agent of the curable fluorine-containing copolymer:

condition 1: an average particle size of the resin particle is 0.1 to 50 μm;
condition 2: a refractive index of the resin particle at 20°C is 0.8 to 1.2 times that of a film composed of the fluorine-containing copolymer (A) at 20°C;
condition 3: a 10% compression strength of the resin particle is 40 MPa or less;
condition 4: a compressibility of the resin particle is 20% or more; and
condition 5: the resin particle does not suffer from brittle fracture under a load force of 0.1 mN,

[Chemical formula 2]

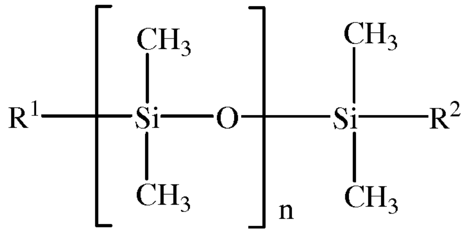

(1)

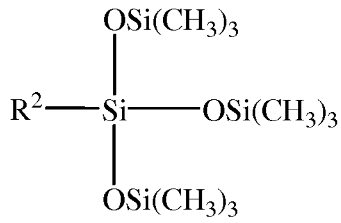

(2)

wherein $R^1$ represents an alkyl group with 1 to 6 carbon atoms, $-(CH_2)_r-OOC(CH_3)C=CH_2$ or $^-CH=CH_2$; $R^2$ represents $^-(CH_2)_r-OOC(CH_3)C=CH_2$ or $^-CH=CH_2$, n represents a number of 1 to 420, and r represents a number of 1 to 6.

The paint composition of this embodiment contains the curing agent in an amount of preferably 1 to 300 parts by mass, more preferably 2 to 250 parts by mass, further preferably 3 to 200 parts by mass, further more preferably 10 to 150 parts by mass, and further more preferably 15 to 100 parts by mass relative to 100 parts by mass of component (A).

In the paint composition of this embodiment, component (A) is contained in an amount of preferably 1 to 90 mass%, more preferably 1 to 80 mass%, further preferably 1 to 50 mass%, further more preferably 1 to 30 mass%, and further more preferably 3 to 30 mass%, including when the curing agent is contained in the above range.

In the paint composition of this embodiment, component (B) is contained in an amount of preferably 1 to 99 mass%, more preferably 5 to 99 mass%, further preferably 20 to 99 mass%, further more preferably 40 to 98 mass%, and further more preferably 50 to 95 mass%, including when the curing agent is contained in the above range and component (A) is contained in the above range.

In the paint composition of this embodiment, component (C) has a CV value of preferably 30% or less, more preferably 20% or less and further preferably 10% or less, including when the curing agent is contained in the above range, component (A) is contained in the above range, and component (B) is contained in the above range.

In the paint composition of this embodiment, component (C) is preferably composed of one or more resins selected from methacrylic resins, acrylic resins, silicone resins, urethane resins, melamine resins, polystyrene resins, fluoro resins, polyethylene terephthalate resins, polyether ether ketone resins, polycarbonate resins, polyamide resins and polyamide imide resins, including when the curing agent is contained in the above range, component (A) is contained in the above range, component (B) is contained in the above range, and the CV value of component (C) is in the above range.

In the paint composition of this embodiment, component (C) is contained in an amount of preferably 10 to 200 parts by mass, more preferably 30 to 200 parts by mass, further preferably 30 to 150 parts by mass, and further more preferably 30 to 100 parts by mass relative to 100 parts by mass of component (A), including when the curing agent is contained in the above range, component (A) is contained in the above range, component (B) is contained in the above range, the CV value of component (C) is in the above range, and component (C) is composed of the above resins.

In the paint composition of this embodiment, component (A) preferably contains, as a polymerization unit of a compound other than the fluoroolefin and the organosilicon compound, one or more monomers (hereinafter, referred to as monomer (I)) selected from alkyl vinyl ethers, alkyl allyl ethers, methacrylic esters and acrylic esters, and the monomer (I) is preferably present in an amount of 1 to 50 mol% of all the polymerization units, including when the curing agent is contained in the above range, component (A) is contained in the above range, component (B) is contained in the above range, the CV value of component (C) is in the above range, component (C) is composed of the above resins, and component (C) is contained in the above range.

Preferable embodiment of the present invention will be further described.

A paint composition containing: (A) a curable fluorine-containing copolymer having a hydroxyl group and including a fluoroolefin in an amount of 15 to 85 mol% of all monomer units and one or more organosilicon compounds

selected from compounds represented by the following general formulas (1) and (2) in an amount of 0.001 to 30 mol% of all monomer units [hereinafter, referred to as component (A)]; (B) an organic solvent [hereinafter, referred to as component (B)]; (C) a resin particle satisfying the above conditions 1 to 5 [hereinafter, referred to component (C)]; and a polyvalent isocyanate compound as a curing agent of the curing fluorine-containing copolymer, wherein
the curing agent is present in an amount of 1 to 300 parts by mass, further 2 to 250 parts by mass, further 3 to 200 parts by mass, further 10 to 150 parts by mass, and 15 to 100 parts by mass relative to 100 parts by mass of component (A),

component (A) is present in an amount of 1 to 90 mass%, further 1 to 80 mass%, further 1 to 50 mass %, further 1 to 30 mass%, and further 3 to 30 mass%,
component (B) is present in an amount of 1 to 99 mass%, 5 to 99 mass%, further 20 to 99 mass%, further 40 to 98 mass%, and further 50 to 95 mass%,
component (C) has a CV value of 30% or less, further 20% or less and further 10% or less,
component (C) is composed of one or more resins selected from methacrylic resins, acrylic resins, silicone resins, urethane resins, melamine resins, polystyrene resins, fluoro resins, polyethylene terephthalate resins, polyether ether ketone resins, polycarbonate resins, polyamide resins and polyamide imide resins, and
component (C) is present in an amount of 10 to 200 parts by mass, 30 to 200 parts by mass, further 30 to 150 parts by mass, and further 30 to 100 parts by mass relative to 100 parts by mass of component (A).

Preferable embodiment of the present invention will be further described.
A paint composition containing: (A) a curable fluorine-containing copolymer having a hydroxyl group and including a fluoroolefin in an amount of 15 to 85 mol% of all monomer units and one or more organosilicon compounds selected from compounds represented by the following general formulas (1) and (2) in an amount of 0.001 to 30 mol% of all monomer units [hereinafter, referred to as component (A)]; (B) an organic solvent [hereinafter, referred to as component (B)]; (C) a resin particle satisfying the above conditions 1 to 5 [hereinafter, referred to as component (C)]; and a polyvalent isocyanate compound as a curing agent of the curing fluorine-containing copolymer, wherein
the curing agent is present in an amount of 10 to 150 parts by mass, and further 15 to 100 parts by mass relative to 100 parts by mass of component (A),
component (A) is present in an amount of 1 to 50 mass%, further 1 to 30 mass%, and further 3 to 30 mass%,
component (B) is present in an amount of 20 to 99 mass%, further 40 to 98 mass%, and further 50 to 95 mass%,
component (C) has a CV value of 30% or less, further 20% or less, and further 10% or less,
component (C) is composed of one or more resins selected from methacrylic resins, acrylic resins, silicone resins, urethane resins, melamine resins, polystyrene resins, fluoro resins, polyethylene terephthalate resins, polyether ether ketone resins, polycarbonate resins, polyamide resins and polyamide imide resins, and
component (C) is present in an amount of 30 to 150 parts by mass, and further 30 to 100 parts by mass relative to 100 parts by mass of component (A).
Preferable embodiment of the present invention will be further described.
A coated article having a substrate, and a cured film of the paint composition of any of the above preferable embodiments formed on the substrate,
the cured film having a film thickness of 0.1 to 100 μm, further 0.2 to 80 μm, and further 0.5 to 60 μm;
the cured film having a gloss value at 60° of 10 or less, further 5 or less, and further 3 or less;
the substrate being formed to include a material selected from polyurethane, vinyl chloride, polyester, polyolefin, glass and a metal; and
the substrate being film-like or sheet-like.

## Examples

(Synthesis Example 1)

A curable fluorine-containing copolymer was prepared as follows.
An autoclave (withstand pressure: 10 MPa) with a stainless stirrer with an inner volume of 1 L was degassed. 96 g of vinylidene fluoride (hereinafter, abbreviated as VDF), 84 g of tetrafluoro ethylene (hereinafter, abbreviated as TFE), 14.9 g of ethyl vinyl ether (hereinafter, abbreviated as EVE) and 52.2 g of hydroxybutyl vinyl ether (hereinafter, abbreviated as HBVE), 10.5 g of methacryl-modified silicone oil A (number average molecular weight: about 3500) represented by the following structural formula, 400 ml of butyl acetate and 1.3 g of t-butyl peroxypivalate were fed into the autoclave; and while they were stirred, an inner temperature was increased to 60°C.
Methacryl-modified silicone oil A:
$CH_2=C(CH_3)-COO-C_3H_6-Si(CH_3)_2-[O-Si(CH_3)_2]_{44}-OSi(CH_3)_3$
Note that in this example, a ratio of each monomer in all monomer units was as described below.

VDF: 50 mol%
TFE: 28 mol%
EVE: 6.9 mol%
HBVE: 15 mol%
Methacryl-modified silicone oil A: 0.1 mol%

Thereafter, the reaction continued while the stirring was carried out; the stirring was stopped after 20 hours, and the reaction was terminated. The obtained copolymer was isolated by drying under reduced pressure. The yield of copolymer was 242 g, and the reaction rate of monomer was 94%. Regarding the obtained copolymer, a hydroxyl value measured by an acetylation method using acetic anhydride was 104 mg KOH/g resin; a fluorine content measured by a combustion method was 47 mass%; and a number average molecular weight measured by GPC (gel permeation chromatography) was $1.9 \times 10^4$. This copolymer was dissolved in butyl acetate to make a butyl acetate solution with 20 mass% concentration (varnish), which was used to prepare a paint composition.

Examples 1 and Comparative Example 1

(1) Paint composition

A paint composition containing a curable fluorine-containing copolymer a curing agent, a solvent and particles was prepared. Components used for the paint composition were as follows.

[Component (A)]

- Curable fluorine-containing copolymer: the curable fluorine-containing copolymer obtained in Synthesis Example 1 described above.

[Curing agent of component (A)]

- Curing agent: hexamethylene diisocyanate isocyanurate-modified body (trade name: Coronate HX (Tosoh Corporation), solid content: 100%, NCT content ratio: 21 mass%)

[Component (B)]

- Solvent: butyl acetate

[Component (C) and its comparative particles]

- Particle A: acrylic resin particle having an average particle size of 3 μm, a refractive index of 1.49 (20°C), a 10% compression strength of 8.8 MPa, a compressibility of 50%, a load force that caused brittle fracture of 0.35 mN, a CV value of 6%, and a recovery of 10%
- Particle B: acrylic resin particle having an average particle size of 3 μm, a refractive index of 1.49 (20°C), a 10% compression strength of 22.2 MPa, a compressibility of 44%, a load force that caused brittle fracture of 0.35 mN, a CV value of 6%, and a recovery of 10%
- Particle C: silicone resin particle having an average particle size of 3 μm, a refractive index of 1.43 (20°C), a 10% compression strength of 34.7 MPa, a compressibility of 28%, a load force that caused brittle fracture of 0.35 mN, a CV value of 4%, and a recovery of 28%
- Particle D: silica particle having an average particle size of 3 μm, a refractive index of 1.43 (20°C), a load force that caused brittle fracture of 0.03 mN, and a CV value of 7%

Paint compositions of Examples 1-2, 1-4 and 1-5, and Comparative Example 1-1 were prepared as follows.

To 100 parts by mass of varnish composed of 20 mass% of component (A) (hydroxyl value: 104) and the

balance of component (B), 10 parts by mass of particles of Table 1, and further 154.4 parts by mass of component (B) were added, and the mixture was shaken for 30 minutes by a paint shaker. To the mixture, 8.2 parts by mass of a curing agent was added, providing a paint composition. The curing agent was added so that NCO/OH relative to component (A) was 1.1 (mass ratio). Formulated composition of each component in the obtained paint composition was as described below.

| | |
|---|---|
| Component (A): curable fluorine-containing copolymer | 7.3 mass% |
| Curing agent | 3.0 mass% (41 parts by mass relative to 100 parts by mass of component (A)) |
| Component (B): butyl acetate | 86.0 mass% |
| Component (C): particles of Table 1 | 3.7 mass% (50 parts by mass relative to 100 parts by mass of component (A)) |

Paint compositions of Examples 1-1 and 1-3 were prepared in the same manner as above except that component (C) was used so that the amount thereof is equivalent to the value of Table 1 relative to 100 parts by mass of component (A) and the amount of component (B) was adjusted so that the entire became 100 mass%.

(2) Physical property test

Physical properties of particles, cured films and substrates were measured by the following methods. Results are shown in Table 1.

(2-1) Average particle size of particle (condition 1)

An average particle size of particles was measured by use of a Shimadzu micro compression tester MCT-510, and an attached length measurement kit and an attached observation kit (Shimadzu Corporation) through microscopic observation (magnification of object lens: 50 times). The number n of measurements was three and an average thereof was taken as a value of average particle size of condition 1.

(2-2) Refractive index (condition 2)

A refractive index of a film composed of component (A) at 20°C was measured in accordance with JIS K 7142 A method by means of a multi-wavelength Abbe refractometer DR-M2 (manufactured by Atago Co., Ltd.), wherein 2-bromonaphthalene was used as an intermediate liquid and an interference filter with $\lambda$ = 589 nm was used under an environment at 20°C. A coating film formed on a glass plate under any heating and curing conditions so as to have a film thickness of 5 to 50 $\mu$m was used. In the examples, a refractive index of a cured film composed of component (A) and its curing agent was measured.

A refractive index of resin particle at 20°C was measured by JIS K 7142 B method (Becke method). Under an environment at 20°C, resin particles were placed on a slide glass, a refractive liquid was dropped, and the resin particles and the refractive liquid were well mixed. Thereafter, while light (center wavelength: 589 nm) was irradiated from below by an Eye NX type sodium lamp 35 W (manufactured by Iwasaki Electric Co., Ltd.), outlines of resin particles were observed from above by an optical microscope (object lens: 1000 times). Then, when outlines were not observed, it was determined that the refractive liquid and the resin particles had the same refractive index and that refractive index was regarded as the refractive index of the resin particles. A Cargille refractive index liquid (Standard Group Combined Set RF-1/5, manufactured by Cargille) was used as a refractive liquid, and a plurality of refractive liquids having a refractive index (nd25) of 1.400 to 1.700 with a refractive index difference in increments of 0.01 were prepared and used.

(2-3) 10% compression strength of particle (condition 3)

A force at the time of loading and a particle size of particles at that force, and a force at the time of changing to unloading were measured by use of a Shimadzu micro compression tester MCT-510, and an attached length measurement kit and a side observation kit (Shimadzu Corporation) under the conditions: a maximum test force of 2.800 mN, a minimum test force of 0.028 mN, a load rate of 0.0446 mN/sec, a test mode for soft, and an upper pressing indenter plane of $\phi$20. A force-displacement curve at the time of loading and a force-displacement curve at the time of unloading were created, and a strength at 10% displacement of particle size (10% compression strength) was read. The number n of measurements was three, and an average thereof was taken as a value of 10% compression strength of condition 3.

(2-4) Compressibility of particle (condition 4)

A force at the time of loading and a particle size of particles at that force, and a force at the time of changing to unloading were measured by use of a Shimadzu micro compression tester MCT-510, and an attached length measurement kit and a side observation kit (Shimadzu Corporation) under the conditions: a maximum test force of 2.800 mN, a minimum test force of 0.028 mN, a load rate of 0.0446 mN/sec, a test mode for soft, and an upper pressing indenter plane of ϕ20. A force-displacement curve at the time of loading and a force-displacement curve at the time of unloading were created, and a compressibility (%) was calculated by the equation, compressibility (%) = (a maximum displacement (μm) in a state where a load up to a maximum test force was applied/particle size (μm)) × 100. The number n of measurements was three, and an average thereof was taken as a value of compressibility of condition 4.

(2-5) Brittle fracture of particle (condition 5)

A load force at the time when brittle fracture occurred was measured by use of a Shimadzu micro compression tester MCT-510, and an attached length measurement kit and a side observation kit (Shimadzu Corporation) under the conditions: a maximum test force of 2.800 mN, a minimum test force of 0.028 mN, a load rate of 0.0446 mN/sec, a test mode for soft, and an upper pressing indenter plane of ϕ20. The number n of measurements was three, and among them, a minimum value of load force is shown in the table.

(2-6) CV value of particle

A CV value of particles was measured by use of a Shimadzu laser diffraction particle size distribution analyzer SALD-2300 (Shimadzu Corporation) and a cyclone type dry measurement unit DS5 (Shimadzu Corporation, a dispersion pressure of 0.4 MPa, a table climbing rate of 6 to 10 mm/sec) under the conditions: a dispersion pressure of 0.4 MPa and a table climbing rate of 6 to 10 mm/sec.

(2-7) Recovery of particle

A force at the time of loading and a particle size of particles at that force, and a force at the time of changing to unloading were measured by use of a Shimadzu micro compression tester MCT-510, and an attached length measurement kit and a side observation kit (Shimadzu Corporation) under the conditions: a maximum test force of 2.800 mN, a minimum test force of 0.028 mN, a load rate of 0.0446 mN/sec, a test mode for soft, and an upper pressing indenter plane of ϕ20. A force-displacement curve at the time of loading and a force-displacement curve at the time of unloading were created, and was calculated by the equation, recovery (%) = {(a maximum displacement (μm) in a state where a load up to a maximum test force was applied - a displacement (μm) at the time when a test force was decreased to a minimum test force while a load was excluded from the maximum test force)/particle size (μm)} × 100. The number n of measurements was three, and an average thereof was taken as a value of recovery.

(3) Preparation of coated article

A paint composition was applied to a substrate by use of a bar coater (No. 20, manufactured by Daiichi Rika Kabushiki Kaisha) so that a dry film thickness was 6 μm. As the substrate, a commercially available wet urethane synthetic leather was used. The substrate having a coating of the paint composition was heated at 120°C for 5 minutes and then at 80°C for 25 minutes. Then, a coated article (polyurethane synthetic leather treated for delustering and stain-resistance) was obtained.

(4) Evaluation

Evaluations described below were conducted on the coated articles. Results are shown in Table 2.

(4-1) Appearance

An appearance of the coated article was visually observed to determine whether a white blur or the like was present.

(4-2) Gloss value at 60°

GLOSS CHECKER IG-330 (Horiba, Ltd.) was used to measure a gloss value at 60° of a coating film surface

at the level of n = 3.

(4-3) Antifouling property (ink)

(4-3-1) Removal of black pigment of ink

On a surface of the coated article immediately after preparation, an arbitrary figure was drawn with an oil-based ballpoint pen or an oil-based felt-tipped pen, and then, a state when the figure was wiped out with a dry tissue was visually observed. As the oil-based ballpoint pen, Zebra JIM-KNOCK black ink (Zebra Co., Ltd.) was used. In addition, as the oil-based felt-tipped pen, Magic Ink black ink (Teranishi Chemical Industry Co., Ltd.) was used. Based on the following criteria, the removal of each ink was determined and the antifouling property was evaluated.

* Criteria for determining the removal of black pigment of ink
5: black pigment was completely removed
4: an extremely small amount of black pigment remained
3: a small amount of black pigment remained
2: an excessive amount of black pigment remained
1: black pigment was not removed at all

(4-3-2) Prevention of residual coloring matter

An appearance of the coated article after the above evaluation on the removal of ink (4-3-1) was visually observed, and the amount of residual coloring matters derived from ink on the coated article was evaluated. Determination was made based on the following criteria. In these criteria, an article evaluated as a score of 3 or more is acceptable, and a larger number in score is more preferred.

* Criteria for determining the prevention of residual coloring matter
5: no trace of coloring matter
4: a pale yellow trace at such a level as not to impair a commercial value was found
3: a pale brown trace at such a level as not to impair a commercial value was found
2: a pale brown trace at such a level as to impair a commercial value and a slight trace of black pigment were found
1: a brown trace at such a level as to impair a commercial value and a trace of black pigment were found

(4-3-3) Repellence

In addition, regarding the oil-based felt-tipped pen, ink repellence was visually observed when the figure was drawn in the above (4-3-1), and evaluation was made based on the following criteria.

* Criteria for determining the repellence of ink of the oil-based felt-tipped pen
5: ink was repelled quite well
4: ink was repelled well (an area where ink was repelled was smaller than score 5)
3: ink was repelled more or less (an area where ink was repelled was smaller than score 4)
2: ink was slightly repelled (an area where ink was repelled was smaller than score 3)
1: ink was not repelled

(4-4) Antifouling durability

A surface of the coated article was abrasion-treated with a cotton fabric canequim No. 3 canvas under the conditions of: 1000 g of load × 1000 times, a rate of 6000 m/min, and a travel distance of 40 mm. The treated surface was used to make evaluations on the removal of ink, the prevention of residual coloring matter and the repellence in the same manner as in the above (4-3-1) to (4-3-3).

(4-5) Antifouling property (stained cloth)

(4-5-1) Soot stain

A surface of the coated article was rubbed with a stained cloth (EMPA 104 (manufactured by Swissatest) under the conditions of: 1000 g of load × 1000 times, a rate of 6000 mm/min, and a travel distance of 100 mm, and a stain

was adhered thereto. The treated surface was visually observed, and evaluation on the stain adhesive property was made based on the following criteria. The treated surface was further rubbed with a flannel cloth having water impregnated thereinto under the conditions of: 1000 g of load × 10 times, a rate of 6000 mm/min, and a travel distance of 40 mm, and the stain was wiped out. After the wiping-out, the treated surface was visually observed, and evaluation on the removal of stain was made based on the following criteria.

* Criteria for determining the adherence
5: stain was not adhered at all
4: pale stain was adhered
3: stain was adhered
2: strong stain was adhered
1: extremely strong stain was adhered

* Criteria for determining the removal
5: stain was completely removed
4: most of stain was removed
3: stain was removed to some extent (amount of removed stain was smaller than score 4)
2: stain was slightly removed (amount of removed stain was smaller than score 3)
1: stain was not removed at all

(4-5-2) Dye (jeans) stain

A surface of the coated article was rubbed with a jeans fabric (DENIM 2550 Y (manufactured by TESTFABRICS)) having water impregnated thereinto under the conditions of: 1000 g of load × 1000 times, a rate of 6000 mm/min, and a travel distance of 100 mm, and a stain was adhered thereto. The treated surface was further rubbed with a flannel cloth having water impregnated thereinto under the conditions of: 1000 g of load × 10 times, a rate of 6000 mm/min, and a travel distance of 40 mm, and the stain was wiped out. Evaluation on the adherence and the removal of stain was made in the same manner as in the above (4-5-1).

(4-6) Texture

A texture when the coated article was touched by hand was evaluated based on the three criteria.

A: no roughness; smoothness; and flexibility while bending were felt
B: among items of roughness; smoothness; and flexibility while bending, 1 or 2 items were inferior
C: roughness was felt while no smoothness was felt, and flexibility while bending was not felt

[Table 1]

| | | Particle | | | | | | | | |
|---|---|---|---|---|---|---|---|---|---|---|
| | | | Condition 1 | Condition 2 | Condition 3 | Condition 4 | Condition 5 | | | |
| | | Sign | Average particle size (μm) | Refractive index | 10% compression strength (Mpa) | Compressibility (%) | Load force when brittle fracture occurred (mN) | CV value (%) | Recovery (%) | Mixed Mount (Note 3) (Part by mass) |
| Example | 1-1 | A | 3 | 1.49 (1.03) | 8.8 | 50 | 0.35 | 6 | 10 | 30 |
| Example | 1-2 | A | 3 | 1.49 (1.03) | 8.8 | 50 | 0.35 | 6 | 10 | 50 |
| Example | 1-3 | A | 3 | 1.49 (1.03) | 8.8 | 50 | 0.35 | 6 | 10 | 75 |
| Example | 1-4 | B | 3 | 1.49 (1.03) | 22.2 | 44 | 0.35 | 6 | 10 | 50 |
| Example | 1-5 | C | 3 | 1.43 (0.99) | 34.7 | 28 | 0.35 | 4 | 28 | 50 |
| Comparative Example | 1-1 | D | 3 | 1.43 (0.99) | Unmeasurable (brittle fracture) | Unmeasurable (brittle fracture) | 0.03 | 7 | Unmeasurable (brittle fracture) | 50 |
| Comparative Example | 1-2 | Not added | – | 1.45(Note 1) | – | – | – | – | – | – |
| Reference Example | 1-1 | – | – | 1.49(Note 2) | *Test was conducted on only a substrate without application of a paint composition | | | | | |

(Note 1)
In Comparative Example 1-2, only a paint composition without addition of particles was used to prepare a coated article, and the refractive index of the paint composition is shown in the table. This refractive index was equivalent to a refractive index of a thin film composed of component (A) and a curing agent used for the paint composition. Note that in the table, numbers in the parentheses for refractive index are relative values while taking the value of Comparative Example 1-2 as '1._

(Note 2)
The refractive index of substrate obtained by surface reflectance measurement of the substrate (measurement method is as described above) is shown in the table.

(Note 3)
The amount of particles mixed is indicated by unit of part by mass relative to 100 parts by mass of component (A).

[Table 2]

| | | Particle | | Thickness of cured film (μm) | Appearance | 60° gloss value | Antifouling property test (before abrasion test) | | | | | Antifouling durability (after abrasion test) | | | | | Antifouling property (stained cloth) | | | | Texture |
|---|---|---|---|---|---|---|---|---|---|---|---|---|---|---|---|---|---|---|---|---|---|
| | | | | | | | Oil-based ballpoint pen | | Oil-based felt-tipped pen | | | Oil-based ballpoint pen | | Oil-based felt-tipped pen | | | EMPA104 | | DENIM2550Y | | |
| | | Sign | Mixed amount (Note 3) (part by mass) | | | | Removal of ink | Prevention of residual coloring matter | Repellence | Removal of ink | Prevention of residual coloring matter | Removal of ink | Prevention of residual coloring matter | Repellence | Removal of ink | Prevention of residual coloring matter | Adherence | Removal | Adherence | Removal | |
| Example | 1-1 | A | 30 | 6 | No white blur | 3 to 4 | 5 | 5 | 3 | 5 | 4 | 5 | 5 | 3 | 4 | 4 | 3 | 4 | 3 to 4 | 4 | A |
| | 1-2 | A | 50 | 6 | No white blur | 2 | 5 | 5 | 3 | 4 | 4 | 5 | 5 | 3 | 4 | 3 to 4 | 3 | 3~4 | 3 to 4 | 4 | A |
| | 1-3 | A | 75 | 6 | No white blur | 2 | 4 | 3 | 2 | 3 | 3 | 3 to 4 | 3 to 4 | 2 | 3 to 4 | 3 | 2 | 2 | 3 | 3 to 4 | A |
| | 1-4 | B | 50 | 6 | No white blur | 2 | 5 | 5 | 2 | 4 | 4 | 4 | 4 | 2 | 4 | 3 | 3 to 4 | 4 | 3 | 3 to 4 | A |
| | 1-5 | C | 50 | 6 | Small white blur but acceptable | 2 | 5 | 5 | 2 | 4 | 4 | 3 | 3 | 1 | 3 | 2 to 3 | 3 | 3 to 4 | 3 to 4 | 4 | B |
| Comparative Example | 1-1 | D | 50 | 6 | Outstanding white blur | less than 1 | 2 | 2 | 1 | 1 | 1 | 1 | 1 | 1 | 1 | 1 | 1 to 2 | 1 to 2 | 1 to 2 | 2 | C |
| | 1-2 | Not added | – | 6 | Glossy | 4-5 | 5 | 5 | 5 | 5 | 4 | 5 | 5 | 5 | 4 | 4 | 3 | 4 to 5 | 4 | 4 | A |
| Reference Example | 1-1 | *Test was conducted on only a substrate without application of a paint composition | | | – | 1-2 | 1 | 1 | 1 | 1 | 1 | 1 | 1 | 1 | 1 | 1 | 1 | 1 | 1 | 1 | A |

## Claims

**1.** A paint composition comprising (A) a fluorine-containing copolymer, (B) a solvent and (C) a resin particle satisfying the following conditions 1 to 5:

condition 1: an average particle size of the resin particle is 0.1 to 50 μm;
condition 2: a refractive index of the resin particle at 20°C is 0.8 to 1.2 times that of a film composed of the fluorine-containing copolymer (A) at 20°C;
condition 3: a 10% compression strength of the resin particle is 40 MPa or less;
condition 4: a compressibility of the resin particle is 20% or more; and
condition 5: the resin particle does not suffer from brittle fracture under a load force of 0.1 mN.

2. The paint composition according to Claim 1, wherein (A) is a fluorine-containing copolymer containing a fluoroolefin in an amount of 15 to 85 mol% of all monomer units, and one or more organosilicon compounds selected from compounds represented by the following general formulas (1) and (2) in an amount of 0.001 to 30 mol% of all monomer units,

[Chemical Formula 1]

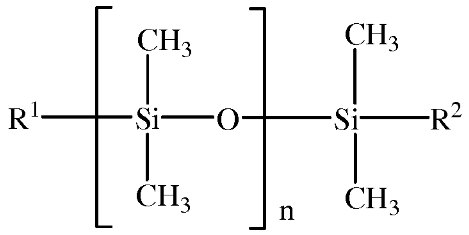

(1)

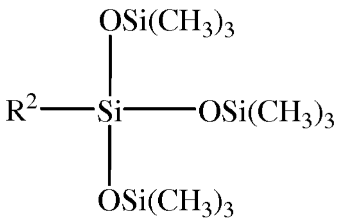

(2)

wherein $R^1$ represents an alkyl group with 1 to 6 carbon atoms, $-(CH_2)_r-OOC(CH_3)C=CH_2$ or $^-CH=CH_2$; $R^2$ represents $^-(CH_2)_r-OOC(CH_3)C=CH_2$ or $^-CH=CH_2$, n represents a number of 1 to 420, and r represents a number of 1 to 6.

3. The paint composition according to Claim 1 or 2, wherein (A) is a curable fluorine-containing copolymer and the paint composition comprises a curing agent of the curable fluorine-containing copolymer.

4. The paint composition according to Claim 3, wherein (A) is a curable fluorine-containing copolymer having a hydroxyl group and the curing agent of the curable fluorine-containing copolymer is a polyisocyanate compound.

5. The paint composition according to Claim 3 or 4, wherein the paint composition contains the curing agent in an amount of 1 to 300 parts by mass relative to 100 parts by mass of (A).

6. The paint composition according to any one of Claims 1 to 5, wherein (A) is contained in an amount of 1 to 90 mass%.

7. The paint composition according to any one of Claims 1 to 6, wherein (B) is an organic solvent.

8. The paint composition according to any one of Claims 1 to 7, wherein (B) is contained in an amount of 1 to 99 mass%.

9. The paint composition according to any one of Claims 1 to 8, wherein (C) has a CV value of 30% or less.

10. The paint composition according to any one of Claims 1 to 9, wherein (C) is composed of one or more resins selected from methacrylic resins, acrylic resins, silicone resins, urethane resins, melamine resins, polystyrene resins, fluoro resins, polyethylene terephthalate resins, polyether ether ketone resins, polycarbonate resins, polyamide resins and polyamide imide resins.

11. The paint composition according to any one of Claims 1 to 10, wherein (C) is contained in an amount of 10 to 200 parts by mass relative to 100 parts by mass of (A).

12. A coated article comprising a substrate, and a cured film of the paint composition according to any one of Claims 1 to 11 formed on the substrate.

**13.** The coated article according to Claim 12, wherein the cured film has a film thickness of 0.1 to 100 μm.

**14.** The coated article according to Claim 12 or 13, wherein the cured film has a gloss value at 60° of 10 or less.

**15.** The coated article according to any one of Claims 12 to 14, wherein the substrate is formed to include a material selected from polyurethane, vinyl chloride, polyester, polyolefin, glass and metal.

**16.** The coated article according to any one of Claims 12 to 15, wherein the substrate is film-like or sheet-like.

**17.** The coated article according to any one of Claims 12 to 16, wherein a refractive index of (C) at 20° C is 0.95 to 1.05 times that of an outermost layer of the substrate at 20°C.

**18.** A method for forming a cured film comprising:

applying the paint composition according to any one of Claims 1 to 11 to a substrate to form a coating film; and curing the coating film to form a cured film.

**19.** The method for forming a cured film according to Claim 18, wherein the cured film has a film thickness of 0.1 to 100 μm.

**20.** The method for forming a cured film according to Claim 18 or 19, wherein the cured film has a gloss value at 60° of 10 or less.

**21.** The method for forming a cured film according to any one of Claims 18 to 20, wherein the substrate is formed to include a material selected from polyurethane, vinyl chloride, polyester, polyolefin, glass and metal.

**22.** The method for forming a cured film according to any one of Claims 18 to 21, wherein the substrate is film-like or sheet-like.

**23.** The method for forming a cured film according to any one of Claims 18 to 22, wherein a refractive index of (C) at 20°C is 0.95 to 1.05 times that of an outermost layer of the substrate at 20°C.

**24.** The method for forming a cured film according to any one of Claims 18 to 23, wherein the coating film is cured by heating to 30 to 250°C.

## INTERNATIONAL SEARCH REPORT

International application No. PCT/JP2018/012080

**A. CLASSIFICATION OF SUBJECT MATTER**

Int. Cl. C09D127/12(2006.01)i, B05D7/24(2006.01)i, C09D7/20(2018.01)i, C09D7/42(2018.01)i, C09D175/04(2006.01)i

According to International Patent Classification (IPC) or to both national classification and IPC

**B. FIELDS SEARCHED**

Minimum documentation searched (classification system followed by classification symbols)

Int. Cl. C09D1/00-201/10, B05D7/24

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 07-331122 A (HOKKAIDO PREFECTURE) 19 December 1995, claims, examples (Family: none) | 1-24 |
| A | JP 2010-195900 A (PANASONIC ELECTRIC WORKS CO., LTD.) 09 September 2010, claims, examples (Family: none) | 1-24 |
| A | WO 2006/080447 A1 (KOBE STEEL, LTD.) 03 August 2006, claims, examples & CN 101124084 A | 1-24 |
| A | JP 2010-007242 A (PANASONIC ELECTRIC WORKS CO., LTD.) 14 January 2010, claims, examples (Family: none) | 1-24 |

☒ Further documents are listed in the continuation of Box C. ☐ See patent family annex.

* Special categories of cited documents:
“A” document defining the general state of the art which is not considered to be of particular relevance
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| Date of the actual completion of the international search | Date of mailing of the international search report |
|---|---|
| 05.06.2018 | 19.06.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No. PCT/JP2018/012080

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-049111 A (NIPPON PAINT CO., LTD.) 21 February 2003, claims, examples (Family: none) | 1-24 |
| A | JP 2008-127424 A (AGC COAT-TECH CO., LTD.) 05 June 2008, claims, examples (Family: none) | 1-24 |
| A | JP 2004-203921 A (DAIKIN INDUSTRIES, LTD.) 22 July 2004, claims, examples & US 2006/0150863 A1, claims, examples & WO 2004/059014 A1 & EP 1577400 A1 & KR 10-2005-0087850 A & CN 1729301 A | 1-24 |
| A | JP 2008-527081 A (3M INNOVATIVE PROPERTIES COMPANY) 24 July 2008, claims, examples & US 2006/0148971 A1, claims, examples & WO 2006/086081 A1 & EP 1831288 A1 & CN 101111538 A | 1-24 |
| A | JP 2004-216789 A (YODOGAWA STEEL WORKS LTD.) 05 August 2004, claims, examples (Family: none) | 1-24 |
| A | JP 09-157545 A (NIPPON PAINT CO., LTD.) 17 June 1997, claims, examples (Family: none) | 1-24 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003049111 A
- JP 2008127424 A
- JP 4333674 A
- JP 2000313725 A
- JP 2005146179 A